# EUROPEAN PATENT APPLICATION

(11) **EP 0 727 252 A1**
(43) Date of publication of application: **21.08.1996**
(21) Application number: 95102355.5
(22) Date of filing: 20.02.1995
(51) Int. Cl.: B01J 20/04, C10K 1/20, B01D 53/14, B01D 53/50, B01D 53/86, B01D 53/68

(54) **Agent for neutralization of toxic gases**

(71) Applicant: Przedsiebiorstwo Wielobranzowe " VET-AGRO" Sp. z o.o., PL-20-616 Lublin (PL)
(72) Inventor: Nazimek, Dobieslaw, 20-264 Lublin (PL)
(74) Representative: von Füner, Alexander, Dr.

(57) **Abstract**

An agent for neutralization of toxic gases being produced during combustion of organic fuels, contains 3 to 10% of alkali metal carbonate, 7 to 15% of zinc oxide and 75 to 90% of MgO by weight. Aluminium oxide or/and calcium carbonate or/and urea are used as preferable additions. The agent can be added either to fuel or straight into a furnace.
The agent in an alternative solution is in a form of suspension in a liquid, preferably a combustible liquid.
The agent, apart from decreasing of emission of acid gas contaminations and CO, increases fuel combustion temperature and self-clearing of the furnace and outlet system. It is especially suitable for use in power generating stations.

## Description

The invention relates to an agent for neutralization of toxic gases, sulfur and nitric oxides and carbon monoxide in particular, contained in combustion gases.

Large amounts of toxic gases are produced during combustion of fuels, especially organic ones. The gases contain sulfur oxides, nitric oxides and carbon monoxide. They affect harmfully on human health and all the human environment. Therefore researches over neutralization of the toxic substances contained in combustion gases have been held for many years.

A way of removing gaseous acid contaminations from waste gases, resulting from industrial processes, is known from the Polish patent specification No. 141220. It is based on introduction in temperature range from 180 to 220°C of a reactive substance, in the amount at least stoichiometric to the amount of contaminations, into the gas stream and after getting solid particles they contact with water in a special apparatus. Water suspension of Ca(OH)₂, gaseous ammonia, powdered Ca(OH)₂ are used among others as the reactive substance and also there is a possibility of use of Na₂CO₃, MgO, ZnO.

Alkali metal oxides or/and alkaline earth metal oxides or substances being subject to transformation into oxides in the furnace are used for also combustion gas purification in the way known from the Polish patent specification No. 148178. Dolomite, calcium oxide or calcium carbonate in the at least stoichiometric amounts that is 3 to 10% of burnt fuel by weight are mentioned in the patent specification.

The nature of the agent for neutralization of toxic gases, according to the invention, is its content of 3 to 10% of alkali metal carbonate by weight or a substance from which in combustion process conditions an alkali metal carbonate is temporarily generated, 7 to 15% of zinc oxide by weight and 75 to 90% of MgO by weight or a substance from which in combustion process conditions MgO is temporarily generated. The agent is in a dispersed form. Alkali metal carbonate is preferably sodium carbonate.
The agent contains preferably aluminium oxide in the amount not higher than the total weight of the other components.
The agent contains preferably equal amounts of calcium carbonate and urea in the amount up to 10% of the total weight of the other components.

The nature of the alternative agent for neutralization of toxic gases, according to the invention, is its content of 3 to 10% of sodium carbonate, 7 to 15% of zinc oxide and 75 to 90% of magnesium oxide by weight. Both sodium carbonate and magnesium oxide can be substituted for substances from which they are temporarily generated in the combustion process conditions.
Aluminium oxide in the amount not higher than the whole weight of the other components is preferably used in addition. It is advantageous to add also equal amounts of calcium carbonate and urea in the amount up to 10% by weight of the total weight of the basic components.

The nature of the alternative agent, according to the invention, in liquid state is that the agent is a dispersion of the above mentioned components in a liquid, preferably in a combustible liquid.

The agent, according to the invention, acts on the level of burning grain what does not allow releasing of acid gas contaminations into generated combustion gases. The products of agent activity are bound with nonflammable particles and come into both ashes and atoxic gases escaping with combustion gases.

The agent, according to the invention, is a catalyst and acts in two directions. It causes binding of sulfur oxides and a series of reactions parallel-and-in sequence:
- chemisorption of CO
- chemisorption of NOₓ
- dissociation of NOₓ into components
- surface reaction of oxygen from nitric oxides and chemisorbed carbon oxide with generation of molecular nitrogen and carbon dioxide.

Aluminium oxide increases the volume of agent by additional substance of adsorption properties. The presence of urea and calcium carbonate in the combustion zone ensures elimination of toxic components generated from fuel combustion that can deactivate the agent.

During neutralization of toxic substances a large amount of heat emission increases significantly temperature of the furnace. When hard coal is burnt the temperature increases by about 200K allowing to get higher amount of energy from one kilogram of fuel or to reduce coal demand by over 10% while temperature of the furnace is reduced to the original value. It saves much in the furnace operation and therefore decreases the amount of produced toxic substances since a lower amount of fuel is burnt. The use of the agent causes clearing of the furnace and outlet system allowing longer operation between routine repairs. This use of the agent, according to the invention, requires no special reactors or systems.

### Example I

The agent for neutralization of toxic gases is a mixture of compounds in the form of dust in the following ratio:

| | |
|---|---|
| magnesium oxide | - 4.2 kg |
| aluminium oxide | - 3.0 kg |
| zinc oxide | - 0.6 kg |
| urea | - 0.1 kg |
| calcium carbonate | - 0.1 kg |

The above agent is suitable for neutralization of gases generated during the burning of hard coal of 1.2-1.5% of sulfur content. It is applied into the furnace by means of compressed air stream.

### Example II

The liquid agent for neutralization of toxic gases is a dispertion of dust mixture in oil in the following ratio:

| | |
|---|---|
| magnesium oxide | - 0.86 kg |
| zinc oxide | - 0.07 kg |
| sodium carbonate | - 0.07 kg |
| fuel oil | - 5.0 kg |
| emulsifier | - 0.1 kg |

This agent is suitable for the neutralization of toxic substances emitted as a result of fuel oil burning. It can be added to the oil or injected separately into the furnace.

Evaluation of efficiency of the agent, according to the invention, was done in industrial conditions. Controlled combustion process was carried out in the boiler of WR25 type with movable grate, fired with coal of 0.8% of sulfur content by weight, with consumption of 4 tons per hour, used to produce hot water. A series of measurements of carbon monoxide, sulfur oxides and nitrogen oxides content, of furnace temperature, and of sulfur content in slag was made during normal boiler work. Next, the agent shown as in the Example I was added into the conveyor feeding the fuel to charging bunkers in the amount of 0.5 kg per 1 ton of fuel, that is 0.05% by weight. The test lasted 25 days. During first few days a slight increase of contamination emission was measured but later on a significant decrease followed and then a steady level after seven days was observed. The decrease of contents of SO₂ by about 80%, NOₓ by 80 to 96% and CO by about 80% was reached. A rise of furnace temperature was observed during adding the agent, the result of which was lowering of fuel consumption for generating 1 GJ of energy by 9-11%. At the same time an increase of sulfur content in slag was noticed what was balanced by sulfur content decrease in combustion gases. When feeding of the agent was stopped an increase in contamination emission occurred.

Boiler efficiency higher than before feeding the agent was measured after the test was stopped. A later routine repair proved much lower amounts of stable deposits on the inside surfaces of the furnace and outlet system than it had taken place before. Further industrial tests have proved the thesis that the use of the agent causes also clearing of the furnace and outlet system and thus makes longer time of operation between routine repairs.

## Claims

1. An agent for neutralization of toxic gases containing metal oxides or/and carbonates in a dispersed form, **characterized by** containing 3 to 10% of alkali metal carbonate by weight or a substance from which in combustion process an alkali metal carbonate is temporarily generated, 7 to 15% of ZnO by weight and 75 to 90% of MgO by weight or a substance from which in combustion process MgO is temporarily generated.

2. An agent according to claim 1, **characterized by** the fact that said alkali metal carbonate is sodium carbonate.

3. An agent according to claim 1, **characterized by** containing aluminium oxide in the amount not more than the total weight of the other components.

4. An agent according to claim 1, **characterized by** containing equal amounts of calcium carbonate and urea in the amount up to 10% by weight of the total weight of the other components.

5. An agent for neutralization of toxic gases containing metal oxides or/and carbonates in a dispersed form, **characterized by** containing 3 to 10% of sodium carbonate, 7 to 15% of zinc oxide and 75 to 90% of magnesium oxide by weight.

6. An agent according to claim 5, **characterized by** containing aluminium in the amount not more than the total weight of the other components.

7. An agent according to claim 5, **characterized by** containing equal amounts of calcium carbonate and urea in the amount up to 10% by weight of the total weight of the other components.

8. An agent for neutralization of toxic gases containing metal oxides or/and carbonates in a dispersed form, **characterized by** the fact that it is a suspension phase of components in a liquid while the components contain 3 to 10% of sodium carbonate, 7 to 15% of ZnO and 75 to 90% of MgO by weight.

9. An agent according to claim 8, **characterized by** suspending of components in a combustible liquid.

10. An agent according to claim 8 or 9, **characterized by** containing of equal amounts of sodium carbonate and urea in amount up to 10% by weight of the total weight of the basic components.
